# EUROPEAN PATENT SPECIFICATION

(11) **EP 4 166 769 B1**
(45) Date of publication and mention of the grant of the patent: **09.04.2025**
(21) Application number: 21203071.2
(22) Date of filing: 18.10.2021
(51) Int. Cl.: F02B 75/04, F02B 75/32, F02D 15/02, F16J 1/14, F01P 3/12, F01M 1/06, F01B 31/14, F01M 1/08, F02B 25/04, F16J 1/09, F16J 1/16, F16J 7/00, F01P 3/00

(54) **INTERNAL COMBUSTION ENGINE WITH VARIABLE COMPRESSION RATIO DEVICE**
BRENNKRAFTMASCHINE MIT VORRICHTUNG MIT VARIABLEM KOMPRIMIERUNGSVERHÄLTNIS
MOTEUR À COMBUSTION INTERNE DOTÉ D'UN DISPOSITIF À TAUX DE COMPRESSION VARIABLE

(43) Date of publication of application: 19.04.2023
(60) Divisional application: 24220133.3
(73) Proprietor: WinGD Ltd., 8400 Winterthur (CH)
(72) Inventor: Alder, Roland, 8405 Winterthur (CH); Huber, Cyril, 8547 Gachnang (CH); Stürm, Thomas, 8505 Dettighofen (CH)
(74) Representative: Hepp Wenger Ryffel AG

(56) References cited:
- EP-A1- 3 719 273
- EP-A1- 3 805 538
- US-A1- 2021 071 550

## Description

The present invention is related to an internal combustion and a method for running an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e.g. made by Power-To-Gas or Power-To-Liquid).

Large ships, in particular vessels for transport of goods, usually are powered by internal combustion engines, in particular diesel and/or gas engines, mostly two-stroke, cross head engines.

In a reciprocating piston combustion engine the compression ratio, i.e. the ratio between the volume of the cylinder and combustion chamber in the internal combustion engine at their maximum and minimum values, is an important parameter for the combustion, the thermal efficiency and for the exhaust gas emissions. The compression ratio is usually chosen to yield the best engine performance. Often the high load engine performance is the most relevant point for the choice. For optimal performance over the whole operating range a variable compression ratio would be desirable but due to complications with such a system a compromise is usually made defining a constant compression ratio.

EP2687707A2 discloses large reciprocating piston combustion engines with a control apparatus for controlling the compression ratio of the reciprocating piston combustion machine.

EP3805538A1 discloses a variable compression device for changing a compression ratio of an engine including a crosshead pin connected to the piston rod, the inside of the crosshead pin being provided with a fluid chamber in which the piston rod is moved in a direction of increasing the compression ratio by the pressure-increased working fluid being supplied into the fluid chamber. A pump increases the working fluid in pressure.

US 2021/071550A1 discloses a compression ratio varying mechanism. The piston comprise an oil passage, which is formed inside the piston rod. The cooling oil enters the piston rod through communication hole. The communication hole includes a first opening opened in an outer peripheral side surface of the piston rod and a second opening, which is prevented from being opposed to the first opening in a radial direction of the piston rod and is connected to the oil passage at a position apart from the first opening in the stroke direction. The cooling oil is discharged through an axial return passage within the piston rod and to the outside of the crosshead pin through the outlet hole extending in the axial direction of the crosshead pin.

Variable Compression Ratio (VCR) systems can adjust the compression ratio continuously by a hydraulic cylinder located in the crosshead pin for moving the piston rod in vertical direction. The compression ratio can be adjusted during the normal engine running. The adjustment allows the optimization of the performance at part load without compromising the performance at high/full load. For the dual fuel engines, the compression ratio can be optimized for each fuel mode separately (high compression ratio for diesel mode, low compression ratio for gas mode). An optimization of the compression ratio depending on operational conditions (scavenge air temperature, methane number of fuel gas, wave load, etc.) is possible.

For a continuous reliable operation of a hydraulic VCR system low leakage from the hydraulic chamber/cylinder is important.

Beside the cylinder clearances, the oil viscosity plays an important role for the leakage. The oil viscosity is highly dependent from the temperature, so the lower the temperature of the oil in the fluid chamber of a VCR system the smaller the VCR chamber leakage is.

Piston cooling oil heated up in the piston and discharged from the piston rod via the crosshead pin may heat up the crosshead pin and the hydraulic oil in the fluid chamber.

It is an object of the present invention to avoid the drawbacks of the prior art and in particular to provide an internal combustion engine and a method of operating an internal combustion engine allowing a continuous reliable operation of a VCR system.

The object is achieved by the internal combustion engines and the method for running an internal combustion engine according to the independent claims.

The internal combustion engine has at least one cylinder. Preferably, the internal combustion engine is a large vessel engine with at least one cylinder having an inner diameter of at least 200mm. The internal combustion engine may be a low pressure fuel gas engine or dual-fuel engine with.

The internal combustion engine has at least one piston which is movably arranged within the cylinder. For each cylinder the internal combustion engine further comprises a rotatably arranged crankshaft, with the piston being in each case connected to a crosshead via a piston rod, and with a crosshead pin connected to the piston rod. The crosshead is in each case connected to the crankshaft via a connecting rod to drive the crankshaft.

The engine comprises a variable compression ratio device for changing a compression ratio of an engine. The variable compression ratio device allows the volume above the piston at top dead centre to be changed.

The variable compression ratio device comprises a fluid chamber arranged in the inside of the crosshead pin, in which the piston rod is moveable relative to a bottom of the fluid chamber. The movement may be induced by a pressure-increased working fluid, for example a working oil, being supplied into and out of the fluid chamber.

The internal combustion engine may comprise a pumping device for transporting the working fluid into and out of the fluid chamber for changing the compression ratio.

Typically, the piston rod may include an end portion with a larger diameter at the end part of the piston rod close to the crosshead pin. The outer peripheral surface of the lower end portion of the piston rod close to the crosshead pin may protrude outward in the radial direction, and thus the diameter of the end portion is greater than that of the middle part of the piston rod.

Working fluid may be introduced into the fluid chamber below the end portion of the piston rod close to the crosshead pin. The end portion may comprise a sealing for holding the working fluid below the piston rod.

For the highest compression ratio the enlarged part of the end portion of the position rod may abut against an upper abutment member, for example an upper abutment face of the fluid chamber. For the smallest compression ratio the position rod may abut against the bottom of the fluid chamber.

The piston rod comprises cooling channels. The cooling channels for guiding a cooling fluid are formed inside the piston rod and extend in a stroke direction of the piston.

The crosshead pin comprises at least one first flow path for guiding a cooling fluid, for example a cooling oil, that is to be supplied to at least one of first cooling channels and at least one second flow path for guiding a cooling fluid that is to be discharged from at least one of second cooling channels.

The first flow path is arranged in a first distance to a bottom plane defined by the bottom of the fluid chamber and the second flow path is arranged in second distance to the bottom plane. The first distance is smaller than the second distance. Preferably, the bottom of the fluid chamber is flat and the bottom plane comprises the bottom of the fluid chamber.

Thus, the first flow path has a smaller distance to any working fluid which may be contained in the fluid chamber than the second flow path.

The first flow path comprises a plurality of first channels, which are, preferably uniformly, arranged in a first cross-section of the crosshead pin and parallel to the bottom plane.

The first flow path is for supplying a cooling fluid into the piston rod whereas the second flow path is for discharging the cooling fluid. Normally, cooling fluid transported via the first flow path is cooler than cooling fluid transported via the second flow path. The first flow path defines a cooling plane, which may shield working fluid in the fluid chamber from the second flow path. Hence, the warming of a working fluid, such as hydraulic oil, contained in the fluid chamber by cooling fluid which was heated up in the piston and is discharged from the piston rod via the second flow path is reduced or even prevented. As the working fluid keeps its temperature, the risk of leaking working fluid is reduced and the compression ration may be controlled very precisely.

The internal combustion engine may comprise a further pumping device for transporting the cooling fluid into the first flow path and out of the second flow path.

The second flow path may comprise at least one second channel arranged in a second cross-section of the crosshead pin parallel to the bottom plane. The second flow path may comprise a plurality of second channels, which preferably are uniformly arranged in the second cross-section.

The first flow path may comprise a first number of first channels and the second flow path comprises second number of second channels. The first number may be greater than the second number. A greater number of channels may be distributed more evenly, such that the shielding effect of the first flow path is optimized.

The diameter of first channels may be smaller than diameter of second channels.

Preferably the channels have a circular cross section. Otherwise, at the least the axial diameter of first channels may be smaller than axial diameter of second channels.

A certain rate of cooling fluid guided through channels with a small diameter can be evenly distributed over the cross section of the crosshead pin. An even distribution is especially advantageous for the inflowing cooling fluid as it shields the heat of the outflowing cooling fluid.

The diameter of the second channels for the outflowing cooling fluid may be chosen larger.

The distance between the first channels may be smaller than the distance between the second channels. The first flow path having small distances between the first channels forms a shielding plane with a well distributed cooling fluid.

A first flow path with a great number of first channels having a small diameter and being arranged with a small distance provides for a homogeneous and therefore effective shielding plane.

The diameter of the first channels may be between 5mm and 50mm, preferably between 10mm and 15mm. Too small diameters may cause an increasing hydraulic resistance and manufacturing costs may get too high.

The number of first channels may be between 5 and 30, preferably between 7 and 15. The number may depend on the diameter of the first channels, preferably optimized with respect to hydraulic resistance and/or manufacturing costs, and the engine size.

The distance between first channels may be between 10mm and 70mm, preferably between 20mm and 30mm.

The distance corresponds to a wall thickness between the channels which provides for a sufficient stability and a convenient manufacturing.

The distance may depend on the diameter of the first channels, preferably optimized with respect to hydraulic resistance and/or manufacturing costs, and the engine size.

The crosshead pin may comprise a splitter ring.

The splitter ring may be fixedly arranged with respect to the crosshead pin, in particular above or within the fluid chamber.

The splitter ring may be arranged for defining a first annular cavity in fluid connection with at least one cooling channel for supplying cooling fluid to the piston rod. The splitter ring is arranged such that the first annular cavity is in fluid connection with the first flow path.

The splitter ring is arranged for defining a second annular cavity being in fluid connection with at least one cooling channel for discharging cooling fluid from the piston and being in fluid connection with the second flow path.

The first annular cavity and the second annular cavity are arranged around the piston rod, preferably around the end portion of the piston rod.

The first annular cavity and the second annular cavity may be separated from each other fluid tightly. Exchange between the first annular cavity and the second annular cavity shall be reduced or prevented.

The first annular cavity has a smaller distance to the bottom of fluid chamber than the second annular cavity.

The splitter ring provides for a separation of introduced cooling fluid and discharged cooling fluid and prevents mixing of the introduced cooling fluid and the discharged cooling fluid. The introduced cooling fluid which typically has a lower temperature than the cooling fluid which is discharged from the piston rod may provide for shielding the heat of the discharged cooling fluid form the working fluid contained in the fluid chamber below the piston rod.

At least a first seal member may be arranged on the outer peripheral surface of the end portion of the piston rod. The first seal member may at least partially be provided by a portion of the piston rod having an enlarged diameter and protruding radially outwards.

The first annular cavity may be bounded by the first seal member in stroke direction on the lower side which is closer to the bottom of the fluid chamber and by the splitter ring on the upper side.

Additionally a second seal member may be arranged on the outer peripheral surface of the end portion of the piston rod. The second seal member may at least partially be provided by a portion of the piston rod having an enlarged diameter and protruding radially outwards.

The second annular cavity may be bounded by the splitter ring on the lower side which is closer to the bottom of the fluid chamber and by the second seal member on the upper side.

The first and/or the second seal member may provide sliding ear faces between the piston rod and the crosshead pin.

The pair of the first seal member and a second seal member may be arranged apart from each other in the stroke direction of the piston rod. Preferably the first seal member and a second seal member are arranged on the outer peripheral side surface of a large-diameter end portion of the piston rod.

An annular groove may be formed between the first seal member and a second seal member. In the annular groove the exchange of cooling fluid takes place.

For the highest compression ratio, wherein the piston rod is pressed away from the bottom of the fluid chamber, most of the annular groove is used for the inflowing cooling fluid.

For the smallest compression ratio, wherein the piston rod is closest to the bottom of the fluid chamber, most of the annular groove is used for returning cooling fluid.

For higher compression ratios the first annular cavity has a smaller axial extension than for smaller compression ratios.

Analogously, for higher compression ratios the second annular cavity has a larger axial extension than for smaller compression ratios.

The splitter ring may comprise a seal member being in contact with the outer surface of the piston rod within the annular groove.

The splitter ring may comprise at least two half rings or four quarter rings, preferably being screwed together.

The splitter ring may be radially pressed to the wall of the fluid chamber and/or may be axially pressed into a groove or step within or above the fluid chamber. The splitter ring may be prevented from an axial movement, preferably in the direction towards the bottom of the fluid chamber, by an abutment face of the groove or step.

The splitter ring may be fixed by a locking device, for example a cylindrical shaped spring element, to avoid a rotational and/or axial movement.

The splitter ring may be prevented from an axial movement, preferably in the direction away from the bottom of the fluid chamber, by an abutment face of the spring element.

The piston rod may comprises at least one supply channel for supplying cooling fluid into cooling channels and/or may comprise at least one discharge channel for discharging cooling fluid from cooling channels.

Preferably, the supply channel is in fluid connection with the first annular cavity and/or the discharge channel is in fluid connection to the second annular cavity defined by the splitter ring.

Preferably, the supply channel has a smaller distance to the bottom of fluid chamber than the discharge channel.

Thus, the first flow path, the first annular chamber and the supply channel form a supply system, as well as a the second flow path, the second annular chamber and the discharge channel form a discharge system, wherein the supply system is arranged in a closer distance to the bottom plane than the discharge system.

The working fluid thus is completely shielded from the heat of the discharged cooling fluid by the supply system transporting cooling fluid of a lower temperature.

The internal combustion engine may comprise at least one first knee lever connected to the crosshead pin for providing and/or releasing the cooling fluid. The first knee lever may comprise pipes which are fluidly connected to the first and to the second flow path.

Alternatively or additionally the internal combustion engine may comprise at least one second knee lever connected to the crosshead pin for providing and/or releasing the working fluid. The second knee lever may comprise at least one pipe which is fluidly connected to the fluid chamber.

According to the invention a method for running an internal combustion engine as described above comprises the following steps.

A pressure-increased working fluid is provided in a fluid chamber in which the piston rod is moveable relative to a bottom of the fluid chamber.

When working fluid is supplied into the fluid chamber, the piston rod moves upwardly in a direction away from the bottom of the fluid chamber to increase the compression ratio.

The piston is cooled by guiding a cooling fluid through cooling channels arranged in the piston rod.

The cooling fluid is supplied to at least one of the cooling channels through at least one first flow path in the crosshead pin and the cooling fluid is discharged from at least one of the cooling channels through at least one second flow path in the crosshead pin.

The supplied cooling fluid shields the working fluid from the heat of the discharged cooling fluid.

Shielding may be achieved by the discharged cooling fluid being guided in greater distance to the working fluid in the fluid chamber than the supplied cooling fluid.

According to the invention, the cooling fluid is suppliable to at least one of the cooling channels in an area between the bottom plane and the area where the cooling fluid is discharged from the at least one of the cooling channels.

The working fluid may keep a temperature below 70°C, preferably below 55°C, more preferably below 45°C.

The piston rod may be moved relative to the bottom of the fluid chamber by supplying working fluid into the fluid chamber or discharging supplying working fluid from the fluid chamber.

According to the invention a crosshead pin for an internal combustion engine, as described above, comprises a fluid chamber for guiding a piston rod which is moveable relative to a bottom of the fluid chamber. The fluid chamber may receive a working fluid.

The crosshead pin comprises at least one first flow path for guiding a cooling fluid that is to be supplied to at least one of the cooling channels of the piston rod and at least one second flow path for guiding a cooling fluid that is to be discharged from at least one of the cooling channels of the piston rod.

The first flow path is arranged in a first distance to the bottom plane defined by the bottom of the fluid chamber and the second flow path is arranged in a second distance to the bottom plane. The first distance is smaller than the second distance. The first flow path comprises first channels, preferably uniformly, arranged in a first cross-section of the crosshead pin parallel to the bottom plane.

In the following, the invention is further explained in embodiments by means of figures. Same reference numbers refer to functionally corresponding features.
- Figure 1:: shows a schematic view of an internal combustion engine;
- Figure 2:: shows a schematic view of a variable compression ratio device;
- Figure 3:: shows a further schematic view of the variable compression ratio device;
- Figure 4:: shows a schematic perspective view of a crosshead pin;
- Figure 5:: shows a schematic partial sectional view of a crosshead pin;
- Figure 6:: shows a schematic partial sectional view of the crosshead pin and a piston rod;
- Figure 7:: shows a further schematic partial sectional view of the crosshead pin;
- Figure 8:: shows half sectional views of the crosshead pin with the piston rod in two different positions.

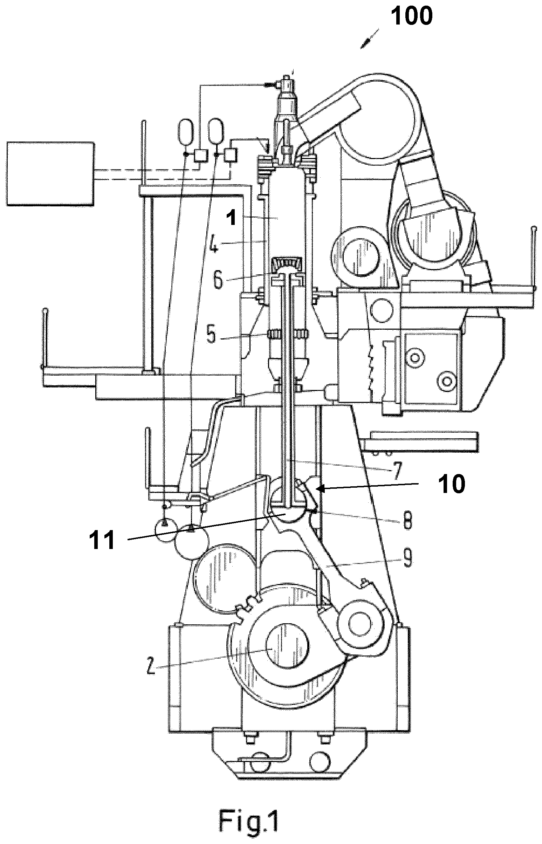

Figure 1 shows a schematic view of an internal combustion engine 100 having a cylinder 1. The engine 100 has a piston 6 which is movably arranged within the cylinder 1. The piston 6 is connected to a crosshead pin 11 arranged in a crosshead 8 via a piston rod 7. The crosshead 8 is connected to a crankshaft 2 via a connecting rod 9 to drive the crankshaft 2.

The engine 100 comprises a variable compression ratio device 10 for changing a compression ratio of an engine.

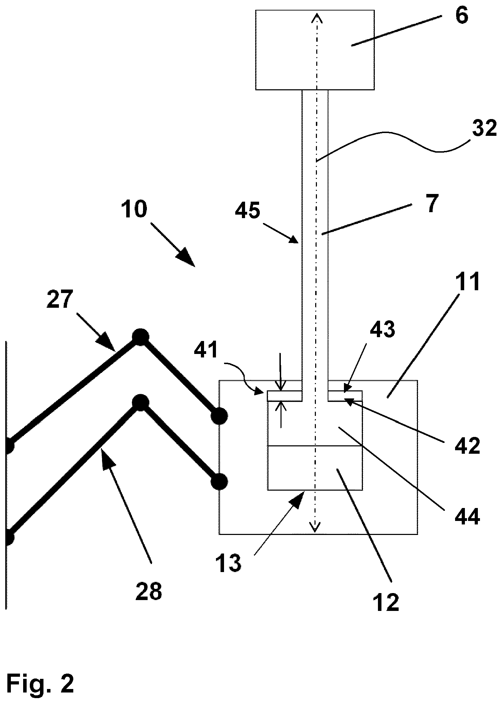

As can be seen in Figure 2, the variable compression ratio device 10 comprises a fluid chamber 12 arranged in the inside of the crosshead pin 11. The piston rod 7 is moveable relative to a bottom 13 of the fluid chamber 12 by a pressure-increased working fluid being supplied into the fluid chamber 12.

A knee lever 28 is connected to the crosshead pin 11 for providing and/or releasing the working fluid.

The end portion 44 of the piston rod 7 has an enlarged radial diameter as compared to the middle portion 45 of the piston rod.

The overall length 32 of the piston rod 7 and the crosshead pin 11 a in the stroke direction changes in accordance with the separation distance 41 between the stepped surface 42 of the end portion 44 of the piston rod 7 and the stepped surface 43 of the crosshead pin 11 in the stroke direction, here an upper abutment face of the fluid chamber 12.

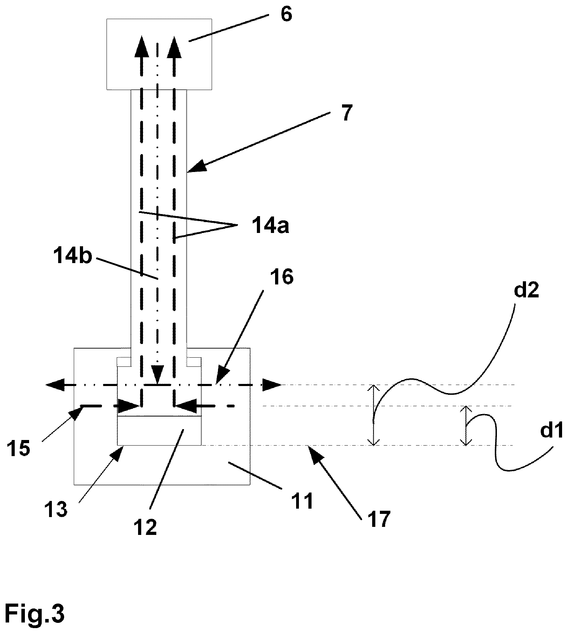

Figure 3 shows a further schematic view of the variable compression ratio device 10.

The piston rod 7 comprises cooling channels 14a, 14b for guiding a cooling fluid to the piston 6. The cooling fluid may be provided by a knee lever 27 which is connected to the crosshead pin 11 (see figure 2).

The crosshead pin 11 comprises a first flow path 15 for guiding a cooling fluid that is to be supplied to first cooling channels 14a and at least one second flow path 16 for guiding a cooling fluid that is to be discharged from a second cooling channel 14b.

The first flow path 15 is arranged in first distance d1 to a bottom plane 17 comprising the bottom 13 of the fluid chamber 12 and the second flow path 16 is arranged in a second distance d2 to the bottom plane 17. The first distance d1 is smaller than the second distance d2.

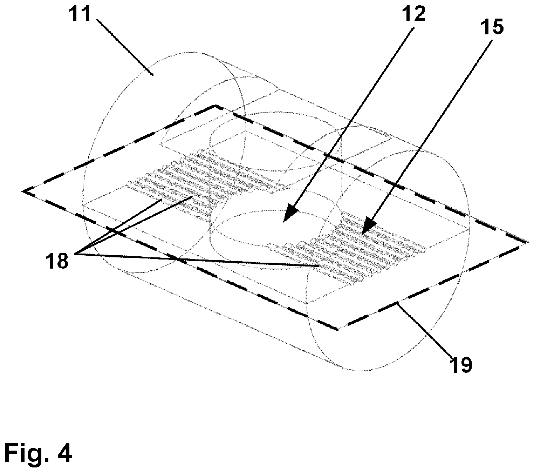

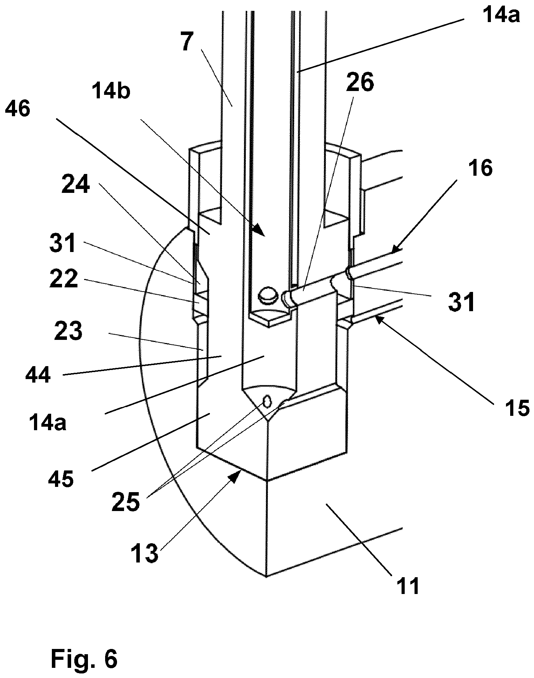

As can be seen in figure 4 the first flow path 15 comprises a plurality of first channels 18, which are uniformly arranged in a first cross-section 19 of the crosshead pin 11 parallel to the bottom plane 17. The first channels 18 are open towards the fluid chamber 12. The first seal member 45 of the piston rod 7 (see figure 6) prevents the cooling fluid from mixing with the working fluid.

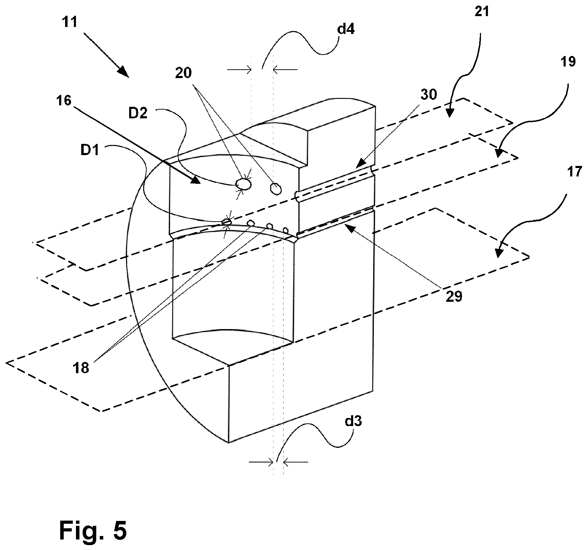

Figure 5 shows a schematic partial sectional view of a crosshead pin 11. The second flow path 16 comprises a plurality of second channels 20 arranged in a second cross-section 21 of the crosshead pin 11 parallel to the bottom plane 17. The first number of first channels 18 is greater than a second number of second channels 20.

The diameter D1 of the first channels 18 is smaller than the diameter D2 of the second channels 20.

The distance d3 between the first channels 18 is smaller than the distance d4 between the second channels 20.

The cooling fluid is supplied to at least one of the cooling channels 14a (see figure 3) in an area 29 between the bottom plane 17 and the area 30 where the cooling fluid is discharged from the cooling channel 14b (see figure 3).

Figure 6 shows a schematic partial sectional view of the crosshead pin 11 and the piston rod 7.

The end portion 44 of the piston rod comprises a first seal member 45 and a second seal member 46 provided by portions of the piston rod 7 having an enlarged diameter and protruding radially outwards.

The crosshead pin 11 comprises a splitter ring 22.

The splitter ring 22 defines a first annular cavity 23 below the splitter ring 22. The first annular cavity 23 is in fluid connection with a cooling channel 14a for supplying cooling fluid to the piston 6 via supply channels 25. The first annular cavity 23 is also in fluid connection with the first flow path 15.

The splitter ring 22 also defines a second annular cavity 24 above the splitter ring 22. The second annular cavity 24 is in fluid connection with at least one cooling channel 14b for discharging cooling fluid from the piston rod 7 via discharge channels 26. The second annular cavity 24 is also in fluid connection with the second flow path 16.

The splitter ring 22 provides for a fluid tight separation between the first annular cavity 23 and the second annular cavity 24.

The first annular cavity 23 is arranged below the second annular cavity 24 and has a smaller distance to the bottom 13 of fluid chamber 12 than second annular cavity 24.

The first annular cavity 23 is limited by the first seal member 45 in stroke direction on the lower side which is closer to the bottom 13 and by the splitter ring 22 on the upper side.

The second annular cavity 24 is limited by the second seal member 46 in stroke direction on the upper side by the splitter ring 22 on the lower side.

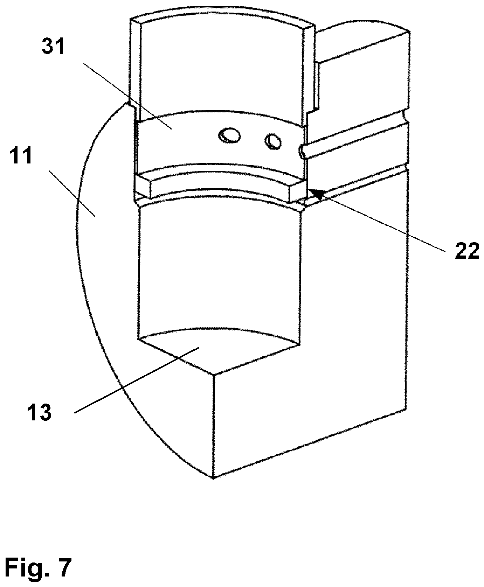

Figure 7 shows a further schematic partial sectional view of the crosshead pin 11.

The splitter ring 22 is fixed to the crosshead pin 11 by a locking device, in this case a cylindrical shaped spring element 31.

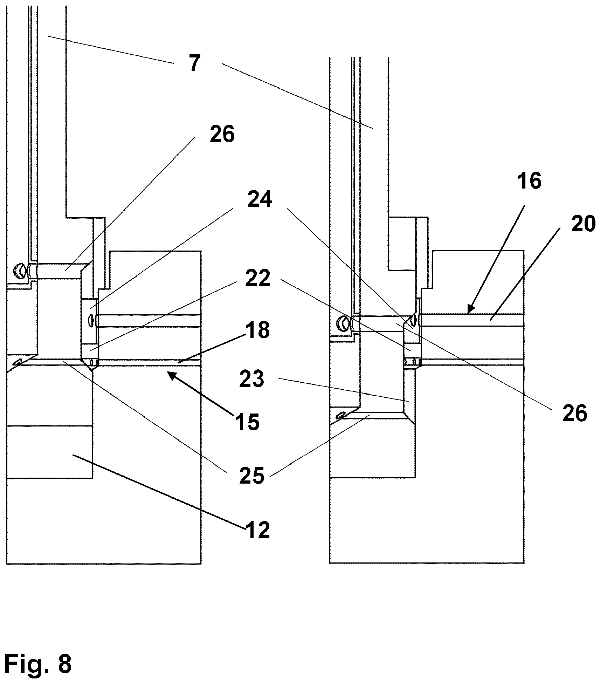

Figure 8 shows half sectional views of the crosshead pin 11 with the piston rod 7 in two different positions.

In the figure on the left the piston rod 7 is in the uppermost position which corresponds to the largest possible compression ratio. The second annular cavity 24 above the splitter ring 22 has its maximal axial extension.

In the figure on the right the piston rod 7 is in the lowermost position which corresponds to the smallest possible compression ratio. The first annular cavity 23 below the splitter ring 22 has its maximal axial extension.

In both cases the second annular cavity 24 is in fluid contact with the discharge channel 26 and second channels 20 of the second flow path 16, whereas the first annular cavity 23 is in fluid contact with the supply channel 25 and first channels 18 of the first flow path 15.

The supply system comprising the first flow path 15, the first annular cavity 23 and the supply channels 25 is arranged below the discharge system comprising the second flow path 16, the second annular cavity 24 and the discharge channel 26 for all axial positions of the piston rod 7.

Thus incoming cooling fluid shields the working fluid contained in the fluid chamber 12 for heat of the discharged cooling fluid for all axial positions of the piston rod 7.

## Claims

1. Internal combustion engine (100) having at least one cylinder (1), preferably a large vessel engine with at least one cylinder (1) having an inner diameter of at least 200mm, preferably a low pressure fuel gas engine, a dual-fuel or multi-fuel engine,
having at least one piston (6) which is movably arranged within the cylinder (1),
having a rotatably arranged crankshaft (2), with the piston (6) being connected to a crosshead (8) via a piston rod (7), and with a crosshead pin (11) connected to the piston rod (7), and with the crosshead (8) being connected to the crankshaft (2) via a connecting rod (9) to drive the crankshaft (2),
the engine comprising a variable compression ratio device (10) for changing a compression ratio of an engine (100), the variable compression ratio device (10) being provided with a fluid chamber (12) arranged in the inside of the crosshead pin (11), in which the piston rod (7) is moveable relative to a bottom (13) of the fluid chamber (12) by a pressure-increased working fluid being supplied into the fluid chamber (12),
the piston rod (7) comprising cooling channels (14a, 14b), the crosshead pin (11) comprising at least one first flow path (15) for guiding a cooling fluid that is to be supplied to at least one of the cooling channels (14a) and at least one second flow path (16) for guiding a cooling fluid that is to be discharged from at least one of the cooling channels (14b),
**characterized in that**,
the first flow path (15) is arranged in a first distance (d1) to a bottom plane (17) defined by a bottom (13) of the fluid chamber (12) and the second flow path (16) is arranged in a second distance (d2) to the bottom plane (17), the first distance (d1) being smaller than the second distance (d2), such that the cooling fluid is suppliable to at least one of the cooling channels (14a) in an area (29) between the plane (17) defined by the bottom (13) of the fluid chamber (12) and the area (30) where the cooling fluid is dischargeable from the at least one of the cooling channels (14b), wherein the first flow path (15) comprises a plurality of first channels (18), preferably uniformly, arranged in a first cross-section (19) of the crosshead pin (11) parallel to the bottom plane (17).

2. Internal combustion engine according to claim 1, wherein the second flow path (16) comprises at least one second channel (20) arranged in a second cross-section (21) of the crosshead pin (11) parallel to the bottom plane (17), preferably the second flow path (16) comprises a plurality of second channels (20), more preferably being uniformly arranged.

3. Internal combustion engine according to claim 1 or 2, wherein the first flow path (15) comprises a first number of first channels (18) and the second flow path (16) comprises second number of second channels (20),
wherein the first number is greater than the second number and/or
the diameter (D1) of first channels (18) is smaller than the diameter (D2) of the second channels (20) and/or
the distance (d3) between the first channels (18) is smaller than the distance (d4) between the second channels (20).

4. Internal combustion engine according to one of the preceding claims, wherein
the diameter (D1) of the first channels is between 5mm and 50mm, and/or
the number of first channels is between 5 and 30 and/or
the distance (d3) between first channels is between 10mm and 70mm.

5. Internal combustion engine according to one of the preceding claims, wherein
the crosshead pin (11) comprises an splitter ring (22),
the splitter ring (22) being arranged for defining a first annular cavity (23) in fluid connection with at least one cooling channel (14a) for supplying cooling fluid to piston (6) and in fluid connection with the first flow path (15), and the splitter ring (22) being arranged for defining a second annular cavity (24) in fluid connection with at least one cooling channel (14b) for discharging cooling fluid from the piston (6) and in fluid connection with the second flow path (16),
the first annular cavity (23) and the second annular cavity (24) being separated from each other, preferably fluid tightly,
the first annular cavity (23) having a smaller distance to the bottom (13) of the fluid chamber (12) than the second annular cavity (24).

6. Internal combustion engine according to claim 5, wherein the splitter ring (22) comprises at least two half rings, preferably being screwed together.

7. Internal combustion engine according to claim 5 or 6, wherein the splitter ring (22) is axially pressed into a groove or step within or above the fluid chamber (12) and/or is fixed by a splitter ring locking device, for example a cylindrical shaped spring element (31) to avoid a rotational and/or axial movement.

8. Internal combustion engine according to one of the preceding claims, wherein the piston rod (6) comprises at least one supply channel (25) for supplying cooling fluid into cooling channels (14a) and comprising at least one discharge channel (26) for discharging cooling fluid from cooling channels (14b), wherein
the supply channel (25) has a smaller distance to the bottom (13) of fluid chamber (12) than the discharge channel (26).

9. Internal combustion engine according to one of the preceding claims, wherein the engine (100) comprises at least one knee lever (27) connected to the crosshead pin (11) for providing and/or releasing the cooling fluid and/or at least one knee lever (28) connected to the crosshead pin for providing and/or releasing the working fluid.

10. Method for running an internal combustion engine (100), according to one of claims 1-9, comprising the steps of
- providing a pressure-increased working fluid in a fluid chamber (12) in which the piston rod (7) is moveable relative to a bottom (13) of the fluid chamber (12),
- cooling the piston (6) by guiding a cooling fluid through cooling channels (14a, 14b) in the piston rod (7),
- Supplying the cooling fluid to at least one of the cooling channels (14a) through at least one first flow path (15) in the crosshead pin (11) and discharging the cooling fluid from at least one of the cooling channels (14b) through at least one second flow path (16) in the crosshead pin (11),
- wherein the cooling fluid is supplied to at least one of the cooling channels (14a) in an area (29) between the plane (17) defined by the bottom (13) of the fluid chamber (12) and the area (30) where the cooling fluid is discharged from the at least one of the cooling channels (14b)
- wherein the supplied cooling fluid shields the working fluid from the heat of the discharged cooling fluid.

11. Method according to one of claims 10, wherein the working fluids keeps a temperature below 70°C, preferably below 55°C, more preferably below 45°C.

12. Method according to one of claims 10 and 11, comprising the step of moving the piston rod (7) relative to the bottom (13) of the fluid chamber (12) by supplying working fluid into the fluid chamber (12) or discharging supplying working from the fluid chamber (12).

## Patentansprüche

1. Verbrennungsmotor (100) mit mindestens einem Zylinder (1), vorzugsweise ein Großmotor mit mindestens einem Zylinder (1) mit einem Innendurchmesser von mindestens 200 mm, vorzugsweise ein Niederdruck-Kraftstoffgasmotor, ein Zweistoff- oder Mehrstoffmotor,
mit mindestens einem Kolben (6), der beweglich innerhalb des Zylinders (1) angeordnet ist,
mit einer drehbar angeordneten Kurbelwelle (2), wobei der Kolben (6) über eine Kolbenstange (7) mit einem Kreuzkopf (8) verbunden ist und ein Kreuzkopfbolzen (11) mit der Kolbenstange (7) verbunden ist und der Kreuzkopf (8) über eine Pleuelstange (9) mit der Kurbelwelle (2) verbunden ist, um die Kurbelwelle (2) anzutreiben,
wobei der Motor eine Vorrichtung (10) für ein variables Verdichtungsverhältnis zum Ändern eines Verdichtungsverhältnisses eines Motors (100) umfasst,
wobei die Vorrichtung (10) für ein variables Verdichtungsverhältnis mit einer Fluidkammer (12) versehen ist, die im Inneren des Kreuzkopfbolzens (11) angeordnet ist, in der die Kolbenstange (7) relativ zu einem Boden (13) der Fluidkammer (12) durch ein unter Druck stehendes Arbeitsfluid bewegbar ist, das in die Fluidkammer (12) zugeführt wird, die Kolbenstange (7) Kühlkanäle (14a, 14b) umfasst,
der Kreuzkopfbolzen (11) mindestens einen ersten Strömungspfad (15) zum Leiten eines Kühlfluids, das mindestens einem der Kühlkanäle (14a) zuzuführen ist, und mindestens einen zweiten Strömungspfad (16) zum Leiten eines Kühlfluids, das aus mindestens einem der Kühlkanäle (14b) abzuführen ist, umfasst,
**dadurch gekennzeichnet, dass**
der erste Strömungspfad (15) in einem ersten Abstand (d1) zu einer durch einen Boden (13) der Fluidkammer (12) definierten Grundebene (17) angeordnet ist und der zweite Strömungspfad (16) in einem zweiten Abstand (d2) zu der Grundebene (17) angeordnet ist, wobei der erste Abstand (d1) kleiner als der zweite Abstand (d2) ist, so dass das Kühlfluid mindestens einem der Kühlkanäle (14a) in einem Bereich (29) zwischen der Ebene (17), die durch den Boden (13) der Fluidkammer (12) definiert ist, und dem Bereich (30), in dem das Kühlfluid aus dem mindestens einen der Kühlkanäle (14b) abgeführt werden kann, zuführbar ist, wobei der erste Strömungspfad (15) eine Vielzahl von ersten Kanälen (18) umfasst, die vorzugsweise gleichmäßig in einem ersten Querschnitt (19) des Kreuzkopfbolzens (11) parallel zur Grundebene (17) angeordnet sind.

2. Verbrennungsmotor nach Anspruch 1, wobei der zweite Strömungspfad (16) mindestens einen zweiten Kanal (20) umfasst, der in einem zweiten Querschnitt (21) des Kreuzkopfbolzens (11) parallel zur Grundebene (17) angeordnet ist, wobei der zweite Strömungspfad (16) vorzugsweise eine Vielzahl von zweiten Kanälen (20) umfasst, die noch bevorzugter gleichmäßig angeordnet sind.

3. Verbrennungsmotor nach Anspruch 1 oder 2, wobei der erste Strömungspfad (15) eine erste Anzahl von ersten Kanälen (18) umfasst und der zweite Strömungspfad (16) eine zweite Anzahl von zweiten Kanälen (20) umfasst,
wobei die erste Anzahl größer ist als die zweite Anzahl und/oder
der Durchmesser (D1) der ersten Kanäle (18) kleiner ist als der Durchmesser (D2) der zweiten Kanäle (20)
und/oder
der Abstand (d3) zwischen den ersten Kanälen (18) kleiner ist als der Abstand (d4) zwischen den zweiten Kanälen (20).

4. Verbrennungsmotor gemäß einem der vorstehenden Ansprüche, wobei
der Durchmesser (D1) der ersten Kanäle zwischen 5mm und 50mm liegt und/oder
die Anzahl der ersten Kanäle zwischen 5 und 30 liegt und/oder
der Abstand (d3) zwischen den ersten Kanälen zwischen 10mm und 70mm liegt.

5. Verbrennungsmotor nach einem der vorstehenden Ansprüche, wobei
der Kreuzkopfbolzen (11) einen Verteilerring (22) umfasst, wobei der Verteilerring (22) so angeordnet ist, dass er einen ersten ringförmigen Hohlraum (23) definiert, der in Fluidverbindung mit mindestens einem Kühlkanal (14a) zum Zuführen von Kühlfluid zu einem Kolben (6) und in Fluidverbindung mit dem ersten Strömungspfad (15) steht,
und der Verteilerring (22) so angeordnet ist, dass er einen zweiten ringförmigen Hohlraum (24) in Fluidverbindung mit mindestens einem Kühlkanal (14b) zum Abführen von Kühlfluid aus dem Kolben (6) und in Fluidverbindung mit dem zweiten Strömungspfad (16) definiert,
wobei der erste ringförmige Hohlraum (23) und der zweite ringförmige Hohlraum (24) voneinander getrennt sind, vorzugsweise fluiddicht,
der erste ringförmige Hohlraum (23) einen geringeren Abstand zum Boden (13) der Fluidkammer (12) aufweist als der zweite ringförmige Hohlraum (24).

6. Verbrennungsmotor nach Anspruch 5, wobei der Verteilerring (22) aus mindestens zwei, vorzugsweise miteinander verschraubten, Halbringen besteht.

7. Verbrennungsmotor nach Anspruch 5 oder 6, wobei der Verteilerring (22) axial in eine Nut oder Stufe innerhalb oder oberhalb der Fluidkammer (12) eingepresst ist und/oder durch eine Verteilerring-Verriegelungsvorrichtung, beispielsweise ein zylindrisch geformtes Federelement (31), fixiert ist, um eine Dreh- und/oder Axialbewegung zu verhindern.

8. Verbrennungsmotor nach einem der vorhergehenden Ansprüche, wobei die Kolbenstange (6) mindestens einen Zuführkanal (25) zum Zuführen von Kühlflüssigkeit in Kühlkanäle (14a) und mindestens einen Abführkanal (26) zum Abführen von Kühlflüssigkeit aus Kühlkanälen (14b) umfasst, wobei der Zuführkanal (25) einen geringeren Abstand zum Boden (13) der Fluidkammer (12) aufweist als der Abführkanal (26) .

9. Verbrennungsmotor gemäß einem der vorhergehenden Ansprüche, wobei der Motor (100) mindestens einen Kniehebel (27) umfasst, der mit dem Kreuzkopfbolzen (11) verbunden ist, um das Kühlfluid bereitzustellen und/oder freizugeben, und/oder mindestens einen Kniehebel (28) umfasst, der mit dem Kreuzkopfbolzen verbunden ist, um das Arbeitsfluid bereitzustellen und/oder freizugeben.

10. Verfahren zum Betreiben eines Verbrennungsmotors (100) gemäß einem der Ansprüche 1 bis 9, das die folgenden Schritte umfasst:
- Bereitstellen eines unter Druck stehenden Arbeitsfluids in einer Fluidkammer (12), in welcher die Kolbenstange (7) relativ zu einem Boden (13) der Fluidkammer (12) bewegbar ist,
- Kühlen des Kolbens (6) durch Leiten eines Kühlfluids durch Kühlkanäle (14a, 14b) in der Kolbenstange (7),
- Zuführen der Kühlflüssigkeit zu mindestens einem der Kühlkanäle (14a) durch mindestens einen ersten Strömungspfad (15) in dem Kreuzkopfbolzen (11) und Abführen der Kühlflüssigkeit aus mindestens einem der Kühlkanäle (14b) durch mindestens einen zweiten Strömungspfad (16) in dem Kreuzkopfbolzen (11),
- wobei das Kühlfluid mindestens einem der Kühlkanäle (14a) zugeführt wird in einem Bereich (29) zwischen der Ebene (17), die durch den Boden (13) der Fluidkammer (12) definiert ist, und dem Bereich (30), in dem das Kühlfluid aus dem mindestens einen der Kühlkanäle (14b) abgegeben wird,
- wobei das zugeführte Kühlfluid das Arbeitsfluid von der Wärme des abgegebenen Kühlfluids abschirmt.

11. Verfahren nach einem der Ansprüche 10, wobei das Arbeitsfluid eine Temperatur unter 70°C, vorzugsweise unter 55°C, stärker bevorzugt unter 45°C, beibehält.

12. Verfahren gemäß einem der Ansprüche 10 und 11, das den Schritt des Bewegens der Kolbenstange (7) relativ zum Boden (13) der Fluidkammer (12) durch Zuführen von Arbeitsfluid in die Fluidkammer (12) oder Ablassen von zugeführtem Arbeitsfluid aus der Fluidkammer (12) umfasst.

## Revendications

1. Moteur à combustion interne (100) comportant au moins un cylindre (1), de préférence un moteur pour gros navires comportant au moins un cylindre (1) ayant un diamètre intérieur d'au moins 200 mm, de préférence un moteur à gaz combustible à basse pression, un moteur à double carburant ou à carburant multiple,
comportant au moins un piston (6) disposé de manière mobile à l'intérieur du cylindre (1),
un vilebrequin (2) rotatif, le piston (6) étant relié à une crosse de piston (8) par l'intermédiaire d'une tige de piston (7), une goupille de crosse (11) étant relié à la tige de piston (7), et la crosse de piston étant reliée au vilebrequin (2) par l'intermédiaire d'une bielle (9) afin d'entraîner le vilebrequin (2),
le moteur comprend un dispositif de taux de compression variable (10) pour modifier le taux de compression d'un moteur (100),
le dispositif de taux de compression variable (10) est pourvu d'une chambre à fluide (12) disposée à l'intérieur de la goupille de crosse (11), dans laquelle la tige de piston (7) est mobile par rapport à un fond (13) de la chambre à fluide (12) grâce à l'arrivée d'un fluide de travail à pression augmentée dans la chambre à fluide (12),
la tige de piston (7) comprend des canaux de refroidissement (14a, 14b),
la goupille de crosse (11) comprend au moins une première voie d'écoulement (15) pour guider un fluide de refroidissement qui doit être fourni à au moins un des canaux de refroidissement (14a) et au moins une deuxième voie d'écoulement (16) pour guider le fluide de refroidissement qui doit être déchargé d'au moins un des canaux de refroidissement (14b),
**caractérisé en ce que**,
la première voie d'écoulement (15) est disposée à une première distance (d1) d'un plan inférieur (17) défini par un fond (13) de la chambre à fluide (12) et la seconde voie d'écoulement (16) est disposée à une seconde distance (d2) du plan inférieur (17), la première distance (d1) étant inférieure à la seconde distance (d2), de telle sorte que le fluide de refroidissement est alimenté par au moins un des canaux de refroidissement (14a) dans une zone (29) située entre le plan (17) défini par le fond (13) de la chambre à fluide (12) et la zone (30) où le fluide de refroidissement peut être évacué d'au moins un des canaux de refroidissement (14b), dans laquelle la première voie d'écoulement (15) comprend une pluralité de premiers canaux (18), de préférence uniformes, disposés dans une première section transversale (19) de la goupille de crosse (11) parallèlement au plan inférieur (17).

2. Moteur à combustion interne selon la revendication 1, dans lequel la deuxième voie d'écoulement (16) comprend au moins un second canal (20) disposé dans une deuxième section transversale (21) de la goupille de crosse (11) parallèlement au plan inférieur (17), de préférence la deuxième voie d'écoulement (16) comprend une pluralité de second canaux (20), plus préférentiellement étant disposés uniformément.

3. Moteur à combustion interne selon la revendication 1 ou 2, dans lequel le premier voie d'écoulement (15) comprend un premier nombre de premiers canaux (18) et le second voie d'écoulement (16) comprend un second nombre de seconds canaux (20),
dans lequel le premier nombre est supérieur au second
et/ou
le diamètre (D1) des premiers canaux (18) est inférieur au diamètre (D2) des second canaux (20)
et/ou
la distance (d3) entre les premiers canaux (18) est inférieure à la distance (d4) entre les seconds canaux (20).

4. Moteur à combustion interne selon l'une des revendications précédentes, dans lequel
le diamètre (D1) des premiers canaux est compris entre 5mm et 50mm, et/ou
le nombre de premiers canaux est compris entre 5 et
et/ou
la distance (d3) entre les premiers canaux est comprise entre 10mm et 70mm.

5. Moteur à combustion interne selon l'une des revendications précédentes, dans lequel
la goupille de crosse (11) comprend une bague de séparation (22)
la bague de séparation (22) est conçu pour définir une première cavité annulaire (23) en liaison fluidique avec au moins un canal de refroidissement (14a) pour alimenter le piston (6) en fluide de refroidissement et en liaison fluidique avec le premier voie d'écoulement (15),
et la bague de séparation (22) est conçu pour définir une deuxième cavité annulaire (24) en liaison fluidique avec au moins un canal de refroidissement (14b) pour évacuer le fluide de refroidissement du piston (6) et en liaison fluidique avec la deuxième voie d'écoulement (16)
la première cavité annulaire (23) et la deuxième cavité annulaire (24) sont séparées l'une de l'autre, de préférence de manière étanche,
la première cavité annulaire (23) ayant une distance au fond (13) de la chambre à fluide (12) inférieure à celle de la deuxième cavité annulaire (24).

6. Moteur à combustion interne selon la revendication 5, dans lequel la bague de séparation (22) comprend au moins deux demi-anneaux, de préférence vissés l'un à l'autre.

7. Moteur à combustion interne selon la revendication 5 ou 6, dans lequel la bague de séparation (22) est pressée axialement dans une rainure ou une marche à l'intérieur ou au-dessus de la chambre de fluide (12) et/ou est fixée par un dispositif de blocage de la bague de séparation, par exemple un élément de ressort de forme cylindrique (31) pour éviter un mouvement rotatif et/ou axial.

8. Moteur à combustion interne selon l'une des revendications précédentes, dans lequel la tige de piston (7) comprend au moins un canal d'alimentation (25) pour alimenter en fluide de refroidissement les canaux de refroidissement (14a) et comprend au moins un canal d'évacuation (26) pour évacuer le fluide de refroidissement des canaux de refroidissement (14b), dans lequel
le canal d'alimentation (25) a une plus petite distance au fond (13) de la chambre à fluide (12) que le canal d'évacuation (26).

9. Moteur à combustion interne selon l'une des revendications précédentes, dans lequel le moteur (100) comprend au moins une genouillère (27) reliée à la goupille de crosse (11) pour fournir et/ou libérer le fluide de refroidissement et/ou au moins une genouillère (28) reliée à l'axe de traverse pour fournir et/ou libérer le fluide de travail.

10. Procédé de fonctionnement d'un moteur à combustion interne (100), selon l'une des revendications 1 à 9, comprenant les étapes suivantes
- fournir un fluide de travail sous pression dans une chambre à fluide (12) dans laquelle la tige de piston (7) est mobile par rapport à un fond (13) de la chambre à fluide (12),
- refroidir le piston (6) en guidant un fluide de refroidissement à travers des canaux de refroidissement (14a, 14b) dans la tige de piston (7),
- l'alimentation en fluide de refroidissement d'au moins un des canaux de refroidissement (14a) par au moins une première voie d'écoulement (15) dans la goupille de crosse (11) et l'évacuation du fluide de refroidissement d'au moins un des canaux de refroidissement (14b) par au moins une deuxième voie d'écoulement (16) dans la goupille de crosse (11)
- dans lequel le fluide de refroidissement est fourni à au moins un des canaux de refroidissement (14a) dans une zone (29) entre le plan (17) défini par le fond (13) de la chambre à fluide (12) et la zone (30) où le fluide de refroidissement est déchargé d'au moins un des canaux de refroidissement (14b)
- dans lequel le fluide de refroidissement fourni protège le fluide de travail de la chaleur du fluide de refroidissement évacué.

11. Procédé selon l'une des revendications 10, dans lequel les fluides de travail conservent une température inférieure à 70° C, de préférence inférieure à 55° C, plus préférentiellement inférieure à 45 C.

12. Procédé selon l'une des revendications 10 et 11, comprenant l'étape consistant à déplacer la tige de piston (7) par rapport au fond (13) de la chambre à fluide (12) en alimentant la chambre à fluide (12) en fluide de travail ou en déchargeant le fluide de travail de la chambre à fluide (12).
